Europäisches Patentamt

European Patent Office

Office européen des brevets

(11) Veröffentlichungsnummer: **0 048 819**
A2

# (12) EUROPÄISCHE PATENTANMELDUNG

(21) Anmeldenummer: 81106539.0

(22) Anmeldetag: 22.08.81

(51) Int. Cl.³: **B 29 F 3/00**, B 29 F 3/08

(30) Priorität: 25.09.80 DE 3036102

(43) Veröffentlichungstag der Anmeldung: 07.04.82
Patentblatt 82/14

(84) Benannte Vertragsstaaten: DE FR GB IT SE

(71) Anmelder: Paul Troester Maschinenfabrik, Am Brabrinke 2-4, D-3000 Hannover 89 (DE)

(72) Erfinder: Gohlisch, Hans-Joachim, Am Lindenhofe 32F, D-3000 Hannover 81 (DE)

(74) Vertreter: Junius, Walther, Dr., Wolfstrasse 24, D-3000 Hannover 81 (DE)

(54) Vorrichtung zur Extrusion von Strängen aus Elastomeren aus Kautschuk und/oder Kunststoffen.

(57) An einer Vorrichtung zur Extrusion von Strängen aus Elastomeren aus Kautschuk und/oder Kunststoffen, bestehend aus einem Schneckenextruder und einem mit gesondertem Antrieb ausgestatteten Scherspritzkopf, in dem ein Scherteil mit einstellbarer Drehzahl angeordnet ist, soll die Aufgabe gelöst werden, die Extrusionsvorrichtung mit höchst einfachen Mitteln so zu gestalten, daß das extrudierte Material die Material-Erwärmungs-Einheit trotz der genannten Unterschiede in der Viskosität immer mit konstanten Temperaturen verlässt und somit die Voraussetzung für einen gleichen Vulkanisations- bzw. einen Vernetzungsgrad garantiert. Die Erfindung löst diese Aufgabe dadurch, daß der Antrieb des Scherspritzkopfes ein stufenloser, in der Drehzahl fein regelbarer Antrieb ist, und daß dem Antrieb eine einstellbare, temperaturgesteuerte Regelvorrichtung vorgeschaltet ist, die die Drehzahl des Antriebes erhöht, wenn die eingestellte Temperatur an der Temperaturmeßstelle unterschritten wird und die die Drehzahl des Antriebes erniedrigt, wenn die eingestellte Temperatur an der Temperaturmeßstelle überschritten wird. Dabei ist es vorteilhaft, wenn die Temperaturmeßstelle hinter dem Scherteil und vor dem Spritzwerkzeug angeordnet ist. Die Temperaturmeßstelle kann aber auch unmittelbar hinter dem Spritzwerkzeug angeordnet sein.

Vorrichtung zur Extrusion von Strängen aus
Elastomeren aus Kautschuk und/oder Kunststoffen

Die Erfindung betrifft eine Vorrichtung zur
Extrusion von Strängen aus Elastomeren aus
Kautschuk und/oder Kunststoffen, bestehend aus
einem Schneckenextruder und einem mit gesondertem Antrieb ausgestatteten Scherspritzkopf, in
dem ein Scherteil mit einstellbarer Drehzahl angeordnet ist.

Durch die DT-AS 10 47 417 ist ein Schneckenextruder bekannt geworden, der ausser der mittels eines
Motors angetriebenen Schnecke noch ein Scherteil
mit gesondertem Antrieb aufweist, welches mit einstellbarer Drehzahl angeordnet ist. Dieses Scherteil ist in einem an den Extruderzylinder angeflanschten Ansatz untergebracht, der in seinem
Inneren trichterförmig zuläuft und an den das Ausformwerkzeug anflanschbar ist. Dieses Bauteil
zwischen dem Zylinder des Schneckenextruders und
dem Ausformwerkzeug bezeichnet man als den Spritzkopf. Das Scherteil ist an dem Ende einer Welle
befestigt, die durch eine Axialbohrung in der Extruderschnecke geführt ist und mit einem gesonderten Antrieb versehen ist, so daß die Extruderschnecke mit einer Drehzahl, das Scherteil mit einer anderen Drehzahl antreibbar ist.

Durch die DE-OS 26 32 335 ist es bekannt geworden, die Achse des Scherteiles im Spritzkopf senkrecht zur Achse der Extruderschnecke anzuordnen. Diese Anordnung zweier mischender Teile in einer aus Schneckenextrudern bestehenden Mischvorrichtung war aber auch bereits zuvor vielfältig bekannt, z.B. aus der DE-OS 14 54 787, der US-PS 28 36 851, der GB-PS 11 49 780 u.a.m. Die Verwendung eines solchen Scherspritzkopfes mit einem gesonderten Antrieb des Scherteiles gibt die Möglichkeit, dem Material, das man im Schneckenextruder so vorsichtig behandelt hat, daß keinerlei Vernetzungs- oder Vulkanisationserscheinungen auftreten, im letzten Augenblick vor der Extrusion durch rein mechanisch mit Hilfe des Scherteiles eingebrachter Energie eine so hohe Temperatur zu geben, daß diese der Vulkanisationstemperatur entspricht. Das hat den Vorteil, daß unmittelbar beim und nach dem Ausformen im Spritzwerkzeug die Vulkanisation bzw. Vernetzung im Strang auftritt.

Die Vulkanisation einer Kautschuk-Mischung bzw. die Vernetzung eines Kunststoffes hängt insbesondere von der chemischen Zusammensetzung, der Einwirkzeit und der Massetemperatur ab.

Man kann davon ausgehen, daß die Zusammensetzung der zu verarbeitenden Materialien ausreichen gleich gehalten werden kann. Ebenso ist es Stand der Technik, die Einwirkzeit, d.h. bei gegebenen Vulkanisations- bzw. Vernetzungs-Strecken-Längen die Produktions-Geschwindigkeit in engen Grenzen zu halten.

Dahingegen ist es normalerweise schwierig oder unmöglich, alle Mischungsherstellungs-Bedingungen konstant zu halten, so daß sich innerhalb einer Charge oder von Charge zu Charge z.T. deutliche Unterschiede vor allem in der Material-Viskosität ergeben. Da aber die Viskosität die durch Dissipation bewirkte Energiezufuhr, d.h. die Erwärmung des Materials in Scherspalten, stark beeinflußt, haben Mischungs-Viskositäts-Unterschiede hinter einem Extruder oder, noch gravierender, hinter einem Scherkopf, Massetemperatur-Unterschiede zur Folge.

Da die Massetemperatur deutlich in die Vernetzungs- bzw. Vulkanisations-Geschwindigkeit eingeht (Richtwert: bei $\pm$ 10$^{o}$C etwa halbe bzw. doppelte erforderliche Vulkanisations- bzw. Vernetzungszeit für gleichen Vernetzungsgrad), können derartige Unterschiede leicht zu Ausschuß der produzierten Teile führen.

Die Erfindung vermeidet diese Nachteile. Es ist die Aufgabe der Erfindung, die Extrusionsvorrichtung mit höchst einfachen Mitteln so zu gestalten, daß das extrudierte Material die Material-Erwärmungs-Einheit trotz der genannten Unterschiede in der Viskosität immer mit konstanten Temperaturen verlässt und somit die Voraussetzung für einen gleichen Vulkanisations- bzw. einen Vernetzungsgrad garantiert.

- 4 -

Die Erfindung besteht darin, daß z.B. der Antrieb eines Scherkopfes in der Drehzahl stufenlos fein regelbar ist, und diese Drehzahl massetemperaturabhängig geregelt wird. Diese Regelvorrichtung erhöht die Drehzahl des Antriebes, wenn die eingestellte Temperatur an der Temperatur-Meßstelle unterschritten wird und verringert die Drehzahl des Antriebes, wenn die vorgegebene Temperatur der Temperatur-Meßstelle überschritten wird.

Dabei ist es vorteilhaft, wenn die Temperatur-Meßstelle hinter dem Scherteil und vor dem Spritzwerkzeug angeordnet ist. Die Temperatur-Meßstelle kann aber auch unmittelbar hinter dem Spritzwerkzeug angeordnet sein.

Dieselbe Erfindung kann angewendet werden, um die vorgewählte, für den Vernetzungs- bzw. Vulkanisations-Prozeß optimale Temperatur hinter einer UHF-Einheit, d.h. zwischen UHF-Teil und nachgeschalteter Heißluftstrecke, konstant zu halten. In diesem Fall würde man die Magnetron-Leistung der UHF-Einheit in Abhängigkeit von der gemessenen Temperatur regeln.

Obwohl das Hauptaugenmerk der Erfindung auf das Konstanthalten der Massetemperatur während einer laufenden Produktion liegt, kann mit der Erfindung sehr leicht Ausschuß während der Anlagen-Anfahr-Phase, in der die Verhältnisse innerhalb des Extruders noch nicht stabil sind und sich daher noch über längere Zeit die Massetemperatur verändert, vermieden werden.

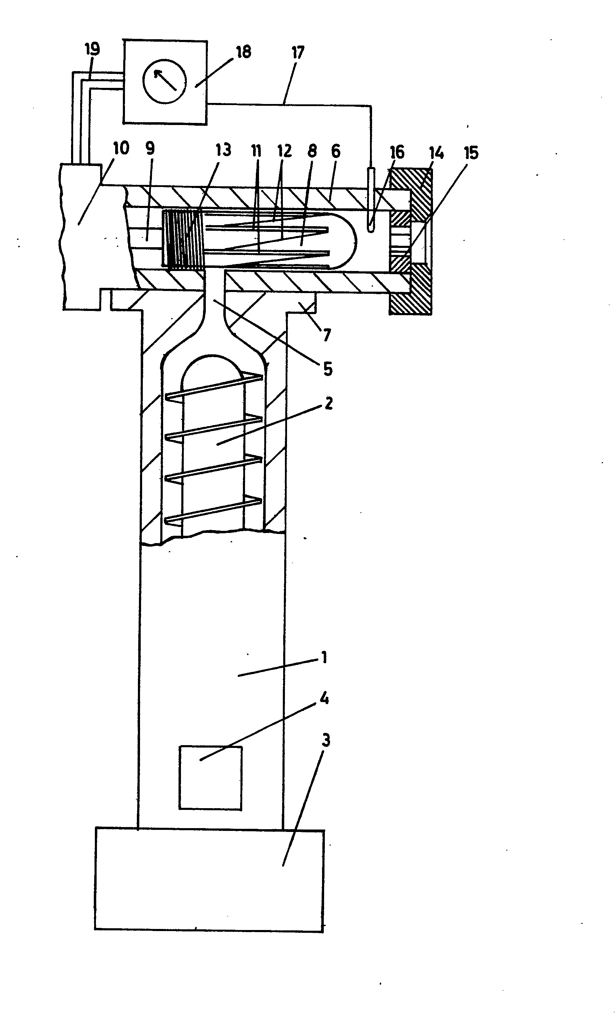

Das Wesen der vorliegenden Erfindung ist nachstehend anhand eines in der Zeichnung schematisch dargestellten Ausführungsbeispieles näher erläutert. Die Zeichnung zeigt einen Schnitt durch die Extrusionsanlage.

Der Schneckenextruder 1 weist in seinem Inneren eine Schnecke 2 auf, die von dem Antrieb 3 angetrieben wird. In dem Schneckenextruder wird das Material durch den Einfülltrichter 4 eingeführt. Das Material tritt nach der Behandlung im Schneckenextruder 1 durch den Kanal 5 in den Scherspritzkopf 6 ein, der an den Flansch 7 des Schneckenextruders 1 angeflanscht ist. In dem Scherspritzkopf 6 ist ein Scherteil 8 angeordnet, welches von dem Antriebsmotor 10 über die Welle 9 angetrieben wird. Das Scherteil kann in verschiedener Weise gesteltet sein, es kann aber auch, wie im gezeichneten Ausführungsbeispiel, achsparallele Scherstege 11 und evtl. auch den Zwischenraum zwischen den achsparallelen Stegen 11 querende Trennstege 12 aufweisen. Auf dem motorseitigen Teil des Scherteiles 8 befindet sich ein Schneckengewinde 13, welches verhindert, daß zu extrudierende Masse in Richtung auf den Motor 10 läuft. Am ausstoßseitigen Ende des Scherteiles 6 ist mittels einer Überwurfmutter 14 ein Formwerkzeug 15 angeordnet. Zwischen dem Formwerkzeug 15 und dem rotierenden Scherteil 8 ist ein Temperaturfühler 16 angeordnet, der über die Leitung 17 an die Regelvorrichtung 18 angeschlossen ist, mit der die Drehzahl des Antriebsmotors 10 geregelt wird. Die Regelimpulse oder die geregelte Antriebsenergie verlaufen über die Zuleitungen

0048819

- 6 -

19. Die Regelung im Regler 18 erfolgt so, daß die Drehzahl des Antriebsmotors 10 erhöht wird, wenn die am Regler 18 eingestellte Temperatur an der Temperatur-Meßstelle 16 unterschritten wird. Die Drehzahl des Antriebsmotors 10 wird erniedrigt, wenn die am Regler 18 eingestellte Temperatur an der Temperatur-Meßstelle 16 überschritten wird.

Patentansprüche:

1. Vorrichtung zur Extrusion von Strängen aus Elastomeren aus Kautschuk und/oder Kunststoffen, bestehend aus einem Schneckenextruder und einem mit gesondertem Antrieb ausgestatteten Scherspritzkopf, in dem ein Scherteil mit einstellbarer Drehzahl angeordnet ist,
   dadurch gekennzeichnet,
   daß der Antrieb (10) des Scherspritzkopfes (6) ein stufenloser, in der Drehzahl fein regelbarer Antrieb ist
   und daß dem Antrieb (10) eine einstellbare, temperaturgesteuerte Regelvorrichtung (18) vorgeschaltet ist, die die Drehzahl des Antriebes (10) erhöht, wenn die eingestellte Temperatur an der Temperaturmeßstelle (16) unterschritten wird und die die Drehzahl des Antriebes (10) erniedrigt, wenn die eingestellte Temperatur an der Temperaturmeßstelle (16) überschritten wird.

2. Vorrichtung nach Anspruch 1,
   dadurch gekennzeichnet,
   daß die Temperaturmeßstelle (16) hinter dem Scherteil (8) und vor dem Spritzwerkzeug (15) angeordnet ist.

3. Vorrichtung nach Anspruch 1,
   dadurch gekennzeichnet,
   daß die Temperaturmeßstelle (16) unmittelbar hinter dem Spritzwerkzeug (15) angeordnet ist.